(19) Europäisches Patentamt
European Patent Office
Office européen des brevets

(11) Numéro de publication : **0 364 328 B1**

# (12) FASCICULE DE BREVET EUROPEEN

(45) Date de publication du fascicule du brevet : **24.06.92 Bulletin 92/26**

(21) Numéro de dépôt : **89402703.6**

(22) Date de dépôt : **02.10.89**

(51) Int. Cl.$^5$ : **C10M 173/02,** B01F 17/00, // (C10M173/02, 103:00, 145:10, 145:36, 149:06, 149:08, 151:02, 151:04, 153:04), C10N30:04

## (54) Dispersions d'halogénures de terres rares en milieu aqueux.

(30) Priorité : **10.10.88 FR 8813263**

(43) Date de publication de la demande : **18.04.90 Bulletin 90/16**

(45) Mention de la délivrance du brevet : **24.06.92 Bulletin 92/26**

(84) Etats contractants désignés : **AT BE CH DE ES FR GB GR IT LI LU NL SE**

(56) Documents cités :
**EP-A- 0 194 621**
**EP-A- 0 201 417**
**EP-A- 0 252 824**
**FR-A- 1 279 937**

(56) Documents cités :
**FR-A- 2 387 911**
**FR-A- 2 483 932**
**GB-A- 2 193 224**
**US-A- 3 830 280**
**US-A- 4 507 214**

(73) Titulaire : **RHONE-POULENC CHIMIE**
**25, quai Paul Doumer**
**F-92408 Courbevoie Cédex (FR)**

(72) Inventeur : **Segaud, Christian**
**3, Impasse La Fontaine**
**F-69740 Genas (FR)**

(74) Mandataire : **Esson, Jean-Pierre et al**
**RHONE-POULENC CHIMIE Service Brevets Chimie 25, quai Paul Doumer**
**F-92408 Courbevoie Cedex (FR)**

EP 0 364 328 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet des dispersions d'halogénures de terres rares, en milieu aqueux et leur procédé de préparation. Plus précisément, l'invention a trait à des dispersions de fluorures de terres rares, en milieu aqueux. L'invention vise également leur application, dans le domaine de la lubrification.

Lorsque deux surfaces, le plus souvent métalliques, sont mises en contact, il est usuel afin d'adoucir le frottement de faire appel à un lubrifiant.

Il est connu que les fluorures de terres rares présentent des propriétés lubrifiantes intéressantes.

La mise en oeuvre de ceux-ci comme lubrifiants requiert une présentation sous forme d'une dispersion aqueuse afin d'assurer un bon recouvrement de la surface à protéger et une répartition homogène et uniforme du lubrifiant sur cette surface.

Par ailleurs, ladite dispersion doit présenter des propriétés de stabilité suffisantes, eu égard à l'application envisagée et généralement, une stabilité est demandée dans une gamme de température allant de - 10°C à + 45°C.

Le but poursuivi par la présente invention est de fournir des dispersions d'halogénures de terres rares en milieu aqueux répondant aux exigences précitées.

Les dispersions d'halogénures de terres rares en milieu aqueux, objet de la présente invention, sont caractérisées par le fait qu'elles comprennent au moins un halogénure de terre rare et au moins un agent dispersant choisi dans le groupe formé par :

(a) un copolymère d'un acide carboxylique éthyléniquement insaturé ou l'un de ses dérivés et d'un composé $\alpha$-oléfinique et/ou d'un composé vinylique,

(b) un homopolymère ou copolymère d'un acide carboxylique éthyléniquement insaturé ou l'un de ses dérivés,

(c) un copolymère d'au moins un acide carboxylique éthyléniquement insaturé et d'au moins un sel d'un acide sulfonique éthyléniquement insaturé.

(d) un polymère d'oxyde d'alcoylène d'un (arylalkyl)phénol, éventuellement phosphaté ou sulfaté.

Interviennent donc, dans les dispersions aqueuses d'halogénures de terres rares, au moins un halogénure d'une terre rare.

Le terme "terre rare" utilisé conformément à l'invention comprend les éléments terres rares ayant des numéros atomiques de 57 à 71 inclus et l'yttrium de numéro atomique égal à 39.

Les éléments terres rares préférés sont les terres rares cériques telles que lanthane, cérium, praséodyme, néodyme et samarium. Parmi celles-ci, le cérium est choisi préférentiellement.

Comme halogénures de terres rares, on peut citer, notamment, les chlorures ou les fluorures : ces derniers étant préférés.

La taille des agrégats, dans le cas d'un trifluorure de terre rare, s'échelonnant entre 0,05 et 3,0 µm avec une répartition granulométrique plus ou moins resserrée selon le mode d'obtention dudit fluorure, il est intéressant que la dispersion aqueuse de l'invention puisse être obtenue à partir de n'importe quel fluorure de terre rare, quelle que soit sa granulométrie.

Le trifluorure de cérium, objet de la demande de brevet français n° 88/08909, qui présente une granulométrie fine et resserrée, constitue une matière première de choix.

Il présente un diamètre moyen de ses agrégats variant entre 0,1 et 0,5 µm et, de préférence, entre 0,15 et 0,30 µm : la fraction granulométrique supérieure à 1 et 2 µm étant respectivement inférieure à 10 et 5 % en poids.

Le caractère monodisperse de la distribution de la taille des agrégats est mis en évidence par l'indice de dispersion défini par le rapport $\frac{d_{84} - d_{16}}{2d_{50}}$ qui est compris dans un intervalle allant de 0,3 à 0,6 et, de préférence, de 0,3 à 0,45.

Une dispersion aqueuse d'un halogénure de terre rare présentant de bonnes propriétés de stabilité est donc obtenue, conformément à l'invention, en mettant en oeuvre un agent dispersant choisi parmi les homo- ou copolymères (a), (b), (c), (d) mis en oeuvre seuls ou en mélange.

Plus précisément, le copolymère (a) est obtenu à partir :

. d'un acide carboxylique insaturé ou l'un de ses dérivés de formule (I) :

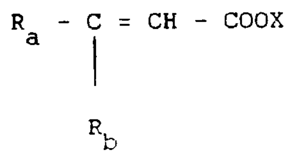 (I)

dans la formule (I) :

– $R_a$ est un atome d'hydrogène ou un radical alcoyle ayant de 1 à 10 atomes de carbone et éventuellement porteur d'un groupement -COOX

– $R_b$ est un atome d'hydrogène ou un groupement -COOX

. et d'un composé α-oléfinique répondant à la formule (II) et/ou un composé vinylique de formule (III) :

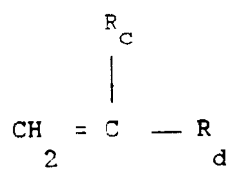 (II)

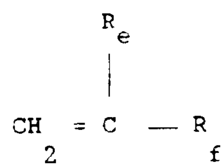 (III)

dans les formules (II) et (III) :

– X représente un atome d'hydrogène, ou un reste d'une base minérale ou organique

– $R_c$ représente un atome d'hydrogène ou un radical alcoyle linéaire ou ramifié ayant de 1 à 4 atomes de carbone

– $R_d$ représente un radical alcoyle linéaire ou ramifié ayant de 1 à 12 atomes de carbone

– $R_e$ représente un atome d'hydrogène ou un radical alcoyle linéaire ou ramifié ayant de 1 à 4 atomes de carbone

– $R_f$ représente l'un des groupements suivants :

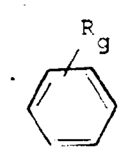

$R_g$ représentant un atome d'hydrogène ou un ou plusieurs radicaux alcoyle ayant de 1 à 4 atoms de carbone

. Cl

. 00C-$R_h$ — $R_h$ étant un radical alcoyle ayant de 1 à 8 atomes de carbone

. O - $R_i$ — $R_i$ ayant la même signification que $R_h$

. COOX

. COO-$R_j$ — $R_j$ ayant la même signification que $R_h$

. CO - $NH_2$

. C ≡ N

Dans ce qui précède, on entend par reste d'une base minérale ou organique, un atome de métal, le plus souvent alcalin tel que sodium ou potassium, un radical ammonium ou un reste d'ammonium de formule $N(R_kR_lR_mR_n)$ dans laquelle $R_k$ représente de l'hydrogène et $R_l$, $R_m$, $R_n$ identiques ou différents, représentent de l'hydrogène, des radicaux alcoyle ou hydroxyalcoyle linéaires ou ramifiés ayant de 1 à environ 4 atomes de carbone ou des radicaux phényle : deux des radicaux alcoyles pouvant former un radical unique divalent contenant éventuellement un atome d'oxygène.

Comme monomères de départ couramment utilisés pour la préparation du copolymère (a), on peut faire

appel en tant que :

– acide carboxylique ou dérivé : l'acide maléique ou l'acide fumarique ou leurs dérivés tels qu'esters, hémiesters ; l'acide itaconique, l'acide citraconique ; l'anhydride maléique ; les acides mono- et dialcoylmaléiques et les acides mono-et dialcoylfumariques : le radical alcoyle ayant de 1 à 4 atomes de carbone,

– composé $\alpha$-oléfinique : on choisit de préférence, un hydrocarbure insaturé à chaîne droite ou ramifiée contenant de 2 à 8 atomes de carbone. On peut citer : l'éthylène, le propylène, le butène-1, l'isobutylène, le n-pentène-1, l'isoprène, le méthyl-2 butène-1, le n-hexène-1, le méthyl-2 pentène-1, le méthyl-4 pentène-1, l'éthyl-2 butène-1, le triméthyl-2,4,4 pentène-1 appelé diisobutylène, le butadiène-1,3, le pentadiène-1,3, l'hexadiène-1,3, l'octadiène-1,3, le méthyl-2 diméthyl-3,3 pentène-1, le méthyl-2 diméthyl-4,4 pentène-1,

– composé vinylique : le styrène, le chlorure de vinyle, les esters vinyliques d'acides aliphatiques ayant de 1 à 8 atomes de carbone tels que l'acétate de vinyle, le propionate de vinyle, le butyrate de vinyle, les éthers vinyliques tels que l'oxyde de méthyle et de vinyle, l'acide acrylique ou méthacrylique, et leurs esters d'alcoyle contenant de 1 à 8 atomes de carbone, tels que l'acrylate de méthyle, d'éthyle ou de butyle, le méthacrylate de méthyle, d'éthyle et de butyle, l'acrylamide, le méthacrylamide, l'acrylonitrile, le méthacrylonitrile.

Le copolymère de l'anhydride maléique avec le diisobutylène constitue une matière première de choix.

La proportion des monomères à mettre en jeu est telle que le rapport molaire acide carboxylique insaturé de formule (I) / composés insaturés de formule (II) et/ou (III) est voisin de 1, de préférence égal à 1.

Les copolymères (a) préférés sont ceux qui ont une masse moléculaire moyenne en poids comprise entre 500 et 50000 et préférentiellement entre 500 et 15000.

Ils sont obtenus par polymérisation radicalaire dans un solvant tel que par exemple le benzène, le toluène, le xylène, le dioxane, l'acétate d'éthyle ou éventuellement le composé $\alpha$-oléfinique ou vinylique utilisé en larges excès.

Les catalyseurs générateurs de radicaux libres convenant à la préparation des copolymères (a) sont le plus souvent des peroxydes ou hydroperoxydes ou des composés azo tels que par exemple, le peroxyde d'acétyle, le peroxyde de di-tert-butyle, le peroxyde de benzoyle, le peroxyde de lauroyle, le perbenzoate de tert-butyle, l'hydroperoxyde de méthyle, l'hydroperoxyde d'éthyle, l'hydroperoxyde de tert-butyle, l'hydroperoxyde de cumène, l'azodiisobutyronitrile et l'azoisobutyrate de diméthyle.

On peut employer le catalyseur à raison de 0,3 à 5 % du poids de monomères engagés.

La température de polymérisation est choisie préférentiellement entre 60°C et le point d'ébullition du milieu réactionnel.

Le copolymère (a) est obtenu en solution organique. Il peut être éventuellement neutralisé par addition d'une base jusqu'à obtention d'un pH compris entre 8 et 12. Comme base susceptible d'être utilisée on peut citer l'hydroxyde de sodium, de potassium, l'ammoniac, l'ammoniaque, un hydroxyde d'ammonium quaternaire par exemple, l'hydroxyde de triméthylbenzylammonium.

Le copolymère (a) éventuellement neutralisé est transféré en solution aqueuse par addition d'eau, puis distillation du solvant organique.

La solution aqueuse de copolymère (a) peut contenir jusqu'à 25 % en poids de matières sèches.

On peut indifféremment faire appel au copolymère (a) sous forme d'un poudre obtenue par séchage dans un four d'atomisation, en pulvérisant la solution aqueuse précédemment obtenue dans un courant d'air dont la température d'entrée en comprise entre 140 et 240°C.

Comme copolymères (a) disponibles dans le commerce, on peut faire appel au copolymère anhydride maléique-diisobutylène vendu par les Sociétés RHONE-POULENC ou GERONAZZO sous les dénominations commerciales GEROPON T 36, GEROPON TA 72 OU GEROPON TAK.

Comme agent dispersant, on peut faire appel également à un polymère (b) résultant de la polymérisation d'au moins un acide carboxylique éthyléniquement insaturé ou l'un de ses dérivés répondant à la formule (IV) :

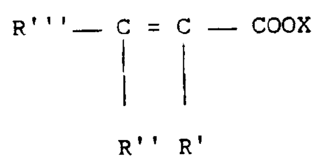

(IV)

dans ladite formule (IV) :

– R′ représente un atome d'hydrogène, un atome chlore ou un radical alcoyle linéaire ou ramifié ayant de 1 à 4 atomes de carbone éventuellement porteur d'un groupement -COOX.

– R″ représente un atome d'hydrogène ou un radical alcoyle linéaire ou ramifié ayant de 1 à 4 atomes de carbone.

– R‴ représente un atome d'hydrogène, un radical alcoyle linéaire ou ramifié ayant de 1 à 4 atomes de carbone ou un groupement -COOX.

– X ayant la signification donnée précédemment.

A titre d'exemples de monomères de départ répondant à la formule (IV), on peut citer : l'acide acrylique ou méthacrylique, et leurs esters d'alcoyle contenant de 1 à 4 atomes de carbone, tels que l'acrylate ou le méthacrylate de méthyle, d'éthyle ou de butyle, l'acide éthacrylique, α-chloroacrylique, crotonique, itaconique, maleïque, fumarique, citraconique, mésaconique ...

Parmi les polymères de type (b), ceux qui sont préférés, résultent de la polymérisation de l'acide acrylique et/ou méthacrylique.

Les acides polyacryliques et/ou polyméthacryliques ou dérivés mis en oeuvre selon l'invention sont des produits connus. Conviennent bien à l'invention des polymères ayant une masse moléculaire en poids comprise entre 1000 et 10000 et, de préférence, entre 2000 et 6000. Leur préparation peut être conduite d'une manière classique.

Généralement, les acides, acryliques et dérivés peuvent être polymérisés en masse, en solution aqueuse ou organique, en émulsion ou en dispersion aqueuse. Dans tous les cas, la polymérisation est est effectuée au moyen d'un initiateur de polymérisation qui peut être un initiateur anionique, organométallique ou un radical libre produit par traitement thermique, par un système rédox ou sous l'effet d'une radiation. La polymérisation de l'acide acrylique et méthacrylique en solution peut être conduite dans l'eau en chauffant le monomère en présence d'initiateurs tels que l'eau oxygénée, le persulfate de potassium, le peroxyde d'acétyle ou en polymérisant le monomère à une température plus basse entre 50 et 100°C en initiant la réaction par un système rédox persulfate de potassium et thiosulfate de sodium.

Une polymérisation similaire en solution aqueuse peut être conduite en irradiant la solution aqueuse par des rayons U.V.

On peut faire également la polymérisation dans des solvants organiques comme le méthanol, le dioxanne en présence d'azobisisobutyronitrile et à haute température ou dans des solvants comme le benzène, le n-hexane avec comme initiateur le peroxyde de benzyole, à température élevée, pour produire un polymère insoluble séparé du milieu par filtration.

Les sels d'acides acryliques et méthacryliques peuvent être polymérisés en milieu aqueux en présence d'initiateurs, mais la plupart du temps, on prépare les sels d'acides polyacryliques et homologues en neutralisant le polymère correspondant avec une base inorganique, telle que par exemple hydroxyde de sodium, de potassium ou d'ammonium ou avec une base organique, notamment les alcanolamines telles que la monoéthanolamine, la diéthanolamine, la triéthanolamine, la N-méthyldiéthanolamine, la N-éthyldiéthanolamine, la N-propyldiéthanolamine, la N-isopropyldiéthanolamine, la N,N-diméthyléthanolamine, la N,N-diéthyléthanolamine, la N,N-dipropyléthanolamine, la N,N-diisopropyléthanolamine.

Comme polymères (b) mis dans le commerce par la Société RHONE-POULENC et bien adaptés à l'invention, on peut citer un copolymère, acide acrylique/ester acrylique neutralisé à la triéthanolamine (GEROPON DA®), un polyméthacrylate de potassium (GEROPON DG®) et un homopolymère de l'acide acrylique neutralisé à la triéthanolamine (GEROPON HB®).

A titre d'agent dispersant, on peut également mettre en euvre un copolymère dénommé copolymère (c) d'au moins un acide carboxylique éthyléniquement insaturé et d'au moins un sel d'un acide sulfonique éthyléniquement insaturé.

Parmi les acides carboxyliques éthyléniquement insaturés entrant dans la composition du copolymère (c), on peut citer : l'acide acrylique, méthacrylique, éthacrylique, α-chloroacrylique, crotonique, itaconique, maléïque, fumarique, citraconique, mésaconique ...

D'une manière préférentielle, on met en oeuvre de l'acide acrylique et/ou méthacrylique et tout particulièrement le couple acid acrylique/acide méthacrylique selon un rapport molaire de l'ordre de 0,05/1 à 10/1 et de préférence de l'ordre de 0,10/1 à 6/1.

Parmi les sels d'acides sulfoniques éthyléniquement insaturés entrant dans la composition du copolymère (c), on peut citer : les allylsulfonates, méthallylsulfonates, vinylsulfonates ou styrène-sulfonates de métaux alcalins ou d'ammonium et tout particulièrement le méthallylsulfonate de sodium ou de potassium.

Selon l'invention, le pourcentage molaire du sel d'acide sulfonique éthyléniquement insaturé peut représenter de 1 à 60 % en mole, de préférence de 2 à 25 % en mole et tout particulièrement de 3 à 8 % en mole du mélange total de monomères.

La masse moléculaire moyenne en poids dudit copolymère est faible ; elle peut être de l'ordre de 500 à 8000 ; elle est généralement de l'ordre de 900 à 6000, de préférence de l'ordre de 1500 à 4000.

Ledit copolymère peut être préparé selon les techniques classiques de polymérisation.

Par exemple, il peut être obtenu par polymérisation radicalaire en solution aqueuse de l'acide ou des acides carboxyliques éthyléniquement insaturés avec un ou des sels d'acides sulfoniques éthyléniquement insaturés. On peut employer par exemple l'eau oxygénée comme catalyseur de formation de radicaux libres, en association avec l'alcool isopropylique en présence de faibles quantités de sel de cuivre, ce dernier pouvant être remplacé par une certaine quantité de sulfate d'hydroxylamine ou d'eau oxygénée avec un sel de fer (sulfate ferreux) et un sulfate d'hydroxylamine, ou encore un persulfate de sodium ou d'ammonium en présence d'acide acétique.

Convient particulièrement bien à la mise en oeuvre de l'invention, le copolymère acide acrylique/acide méthacrylique/métallylsulfonate de sodium, objet du brevet FR-A 2 483 932 et qui est commercialisé par la Société RHONE-POULENC sous la dénomination commerciale PETROGIL D/161® ou D/164®.

Comme agents dispersants du type (d), on peut faire appel à des poly(phényl-1 alkyl)phénols polyoxyalcoylénés, aux sulfates mixtes de poly(phényl-1 alkyl)phénols polyoxyalcoylénés ou aux esters phosphoriques de poly(phényl-1 alkyl) phénols polyoxyalcoylénés répondant à l'une des formules (V) à (VII) suivantes :

$$R_1 -( O - R )_n- OH \qquad (V)$$

$$R_1 -( O - R )_n- O\,SO_3X \qquad (VI)$$

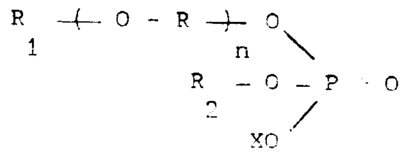
(VII)

dans les formules (V) à (VII) :

- n est compris entre 1 et environ 40
- X représente un atome d'hydrogène ou un reste d'une base minérale ou organique tel que défini précédemment
- R est un radical alcoylène ayant de 2 à 4 atomes de carbone
- $R_2$ est :
  . soit un reste X : les deux restes X (quand $R_2$ = X) pouvant être identiques ou différents
  . soit l'un des radicaux $R_1 -( O - R )_n-$ : les radicaux $R_2$ et $R_1 -( O - R )_n-$ pouvant être identiques ou différents
- $R_1$ représente l'un des radicaux symbolisés par la formule (VIII) :

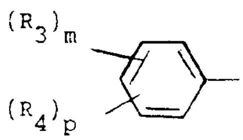
(VIII)

dans la formule (VIII), m est un nombre entier égal à 1, 2, 3 ; p est un nombre entier égal à 1 ou 2 ; $R_4$ représente un atome d'hydrogène ou un radical alcoyle ayant de 1 à 4 atomes de carbone et le radical $R_3$ symbolise un radical de formule (IX) :

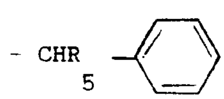
(IX)

$R_5$ représente un atome d'hydrogène, un radical alcoyle ayant de 1 à 4 atomes de carbone ou un radical phényle.

Les composés de formule (V) à (VII) sont des produits connus. Pour leur préparation, on peut se référer notamment aux demandes de brevet français n° 86/10159 et n° 88/05966.

Les agents dispersants (d) préférés répondent à l'une des formules (V) à (VII) dans lesquelles :

- R représente un radical éthylène
- $R_1$ représente un radical de formule (VIII) dans laquelle m est un nombre égal à 2 ou 3 ; $R_4$ est un atome d'hydrogène ; le radical $R_3$ un radical de formule (IX)

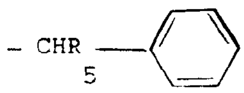 (IX)

dans laquelle $R_5$ symbolise un atome d'hydrogène, un radical méthyle ou phényle

– $R_2$ est :

. soit un reste X : les deux restes X étant identiques quand $R_2$ = X

. soit un radical

$$R_1 \left( O - CH_2 - CH_2 \right)_n :$$

les radicaux $R_2$ et

$$R_1 \left( O - CH_2 - CH_2 \right)_n$$

étant identiques.

Dans ce groupe préféré d'agents dispersants (d), conviennent tout particulièrement bien à l'invention, les agents dispersants de formules (V) à (VII) dans lesquelles :

– n est compris entre 3 et 40

– X est un atome d'hydrogène, un atome de sodium, de potassium, un radical ammonium, une monoéthanolamine, une diéthanolamine, une triéthanolamine

– R est un radical éthylène

– $R_1$ représente un radical de formule (VIII) dans laquelle m est un nombre égal à 2 ou 3 ; $R_4$ est un atome d'hydrogène ; le radical $R_3$ est un radical de formule (IX) :

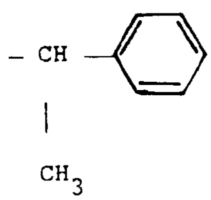 (IX)

– $R_2$ est :

. soit un reste X : les deux restes X étant identiques quand $R_2$ = X

. soit un radical

$$R_1 \left( O - CH_2 - CH_2 \right)_n$$

: les radicaux $R_2$ et $R_1 \left( O - CH_2 - CH_2 \right)_n$ étant identiques.

Les agents dispersants (d) choisis préférentiellement sont les suivants :

A - les tri-(phényl-1 éthyl)phénols polyoxyéthylénés ayant de 10 à 40 moles d'oxyde d'éthylène (O.E.) par mole de phénol.

B - les di-(phényl-1 éthyl)phénols polyoxyéthylénés ayant de 3 à 20 moles d'oxyde d'éthylène par mole de phénol.

C - les sulfates de tri-(phényl-1 éthyl)phénols polyoxyéthylénés ayant de 10 à 40 moles d'oxyde d'éthylène par mole de phénol, sous forme acide ou neutralisée.

D - les sulfates de di-(phényl-1 éthyl)phénols polyoxyéthylénés ayant de 3 à 20 moles d'oxyde d'éthylène par mole de phénol, sous forme acide ou neutralisée.

E - les mono- et diesters phosphoriques de tri-(phényl-1 éthyl)phénols polyoxyéthylénés ayant de 10 à 40 moles d'oxyde d'éthylène par mole de phénol, sous forme acide ou neutralisée.

F - les mono- et diesters phosphoriques de di-(phényl-1 éthyl)phénols polyoxyéthylénés ayant de 3 à 20 moles d'oxyde d'éthylène par mole de phénol, sous forme acide ou neutralisée.

Les différents agents dispersants précités sont des produits connus et disponibles dans le commerce. Ils sont commercialisés par la Société RHONE-POULENC sous la dénomination respective :

A - SOPROPHOR BSU (16 O.E.) CYU (20 O.E.)

B - SOPROPHOR DS 15 (15 O.E.)

C - SOPROPHOR 4 D 384 (16 O.E. forme acide)

D - SOPROPHOR DSS 5 (5 O.E.), DSS 7 (7 O.E.), DSS 11 (11 O.E.), DSS 15 (15 O.E.) (forme acide ou neutralisée)

E - SOPROPHOR 3 D 33 (16 O.E. forme acide) FL (16 O.E. forme neutralisée à la triéthanolamine) FLK (16 O.E. forme neutralisée à l'hydroxyde de potassium)

F - SOPROPHOR 10 D 12/5 (5 O.E.), 10 D 12/7 (7 O.E.), 10 D 12/11 (11 O.E.) 10 D 12/15 (15 O.E.) (forme acide ou neutralisée)

Il doit être bien entendu que l'on peut utiliser les composés de formule (V) à (VII) séparément ou en mélange. Les esters phosphoriques de formule (VII) peuvent être utilisés séparément ou plus généralement sous forme de mélanges de monoester avec le diester correspondant.

A côté de l'agent de dispersant intervenant dans les dispersions aqueuses d'halogénures de terres rares selon l'invention, il peut être souhaitable de mettre en oeuvre des produits auxiliaires, tels que, par exemple, des agents anti-moussants et des agents anti-gels.

Les agents anti-moussants sont destinés à contrôler la formation des mousses, lors de la préparation de la dispersion. On emploie plus spécialement ceux du type polysiloxanes.

Les agents anti-gels ont pour but d'éviter la formation éventuelle des cristaux lors du stockage des dispersions. Des agents anti-gels conventionnels tels que l'éthylène glycol, le propylène glycol, le glycérol, le diéthylène glycol, le triéthylène glycol, le tétraéthylène glycol, l'urée ... peuvent être utilisés.

Pour ce qui est des proportions pondérales des différents constituants des dispersions de l'invention, elles sont généralement les suivantes :

- de 5 à 80 % d'un ou des halogénure(s) de terre(s) rare(s)
- de 0,1 à 12 % d'un agent dispersant (a), (b), (c) et/ou (d)
- de 0 à 5 % d'un agent anti-moussant
- de 0 à 20 % d'un agent anti-gel,
- de l'eau en quantité suffisante pour obtenir 100 %

On donne, ci-après, les compositions préférées des dispersions obtenues :

- de 20 à 60 % d'un ou des halogénure(s) de terre(s) rare(s)
- de 0,3 à 8 % d'un agent dispersant (a), (b), (c) et/ou (d)
- de 0 à 3 % d'un agent anti-moussant
- de 0 à 15 % d'un agent anti-gel
- de l'eau en quantité suffisante pour obtenir 100 %

Un mode d'obtention des dispersions aqueuses d'halogénures de terres rares consiste à préparer une solution contenant l'agent dispersant tel que défini, éventuellement l'agent anti-gel, de l'eau qui constitue le milieu de dispersion, à mettre en dispersion sous agitation, au moins un halogénure de terre rare, puis à effectuer le broyage de la dispersion et éventuellement à dégazer la dispersion obtenue.

La préparation du milieu de dispersion ne présente aucune difficulté. Elle s'effectue sous agitation, par des moyens classiques d'agitation (agitation à ancre, à hélice ou à turbine).

La mise en dispersion de l'halogénure de terre rare s'effectue sous agitation.

L'opération de broyage est poursuivie jusqu'à obtention d'une finesse moyenne de 4 μm environ. Il est préférable qu'aucune particule ne dépasse 50 μm.

Le broyage de la dispersion peut se faire dans un broyeur à billes vertical ou horizontal.

L'opération de dégazage est conduite en maintenant la dispersion sous faible agitation.

Il est posible d'ajouter tout ou partie de l'agent antimoussant soit au cours du broyage, soit lors du dégazage.

Conformément à l'invention, on obtient des dispersions d'halogénures de terres rares en milieu aqueux présentant les propriétés suivantes :

- une très bonne stabilité au stockage,
- une teneur élevée en halogénure de terre rare,
- une viscosité faible.

Les exemples suivants sont donnés à titre indicatif et ne peuvent être considérés comme une limite du domaine et de l'esprit de l'invention.

Les essais A et B sont donnés, à titre comparatif.

Exemples 1 à 11

Dans les exemples 1 à 11, on effectue la préparation de dispersion de trifluorure de cérium en milieu aqueux : le trifluorure de cérium présentant un diamètre moyen d'agrégats de 0,3 μm.

Dans tous le exemples, on suit le même protocole opératoire tel que défini ci-après.

On prépare d'abord le milieu de dispersion, en dissolvant 50 g de l'agent dispersant défini dans les différents exemples, dans 70 g de monoéthylène glycol, puis l'on ajoute 0,1 g d'un agent antimoussant 416/R (silicone) fabriqué par la Société RHONE-POULENC et de l'eau en quantité suffisante pour obtenir un volume d'un litre.

On ajoute selon le cas 1000 g ou 1500 g de trifluorure de cérium sous agitation au moyen d'une turbine ULTRA-TURAX tournant à 1500 tours/minute.

L'agitation est maintenue pendant environ 3 mn pour obtenir un mélange homogène.

On obtient ainsi une prédispersion qui est ensuite broyée dans un "Mini Motor Mill" commercialisé par EIGER ENGINEERING Ltd ; la chambre de broyage est remplie par 59 g de billes de verre de 1 mm de diamètre, la rotation étant de 4000 tours/mn. Le broyage est effectué pendant environ 4 mn.

Le mélange obtenu est laissé pendant 3 à 4 heures au repos (afin d'éliminer les bulles et les mousses présentes).

Les propriétés de stabilité de ladite dispersion sont appréciées en soumettant celle-ci à un test de vieillissement accéléré, qui consiste à chauffer la dispersion dans une étuve à 50°C, pendant 20 jours.

On apprécie la consistance de la dispersion obtenue après stockage, en mesurant sa viscosité à l'aide d'une coupe FORD n° 4 (cF4), à température ambiante.

On considère que le produit obtenu peut être coulé dès lors que sa viscosité est inférieure à 30 secondes.

Pour de bons résultats, il est souhaitable que la viscosité soit inférieure à 20 secondes.

Exemples 1 à 4

Dispersions de trifluorure de cérium comprenant un copolymère de type (a)

On met en oeuvre à titre d'agents dispersants :

– dans les exemples 1 et 2 : un copolymère d'anhydride maléique-diisobutylène neutralisé à l'hydroxyde de sodium (GEROPON T 36)

– dans les exemples 3 et 4 : un copolymère d'anhydride maléique-diisobutylène neutralisé à l'hydroxyde de potassium (GEROPON TAK).

On prépare selon le mode opératoire décrit ci-dessus, une dispersion aqueuse de trifluorure de cérium, à différentes concentrations 1000 g/l et 1500 g/l, en mettant en oeuvre les copolymères précités du type (a).

Les résultats obtenus sont consignés dans le Tableau I.

Tableau 1

| Exemple | Agent dispersant | Dispersion | | Après stockage 20 jours à 50°C | |
|---|---|---|---|---|---|
| | | Concentration en $CeF_3$ | pH de la dispersion | Viscosité coupe FORD n° 4 | Observations |
| 1 | Sel de sodium copolymère anhydride maléique -diisobutylène (GEROPON T 36) | 1000 g/l | pH = 9,7 | CF = 13 s | Pas de sédimentation |
| 2 | Sel de sodium copolymère anhydride maléique -diisobutylène (GEROPON T 36) | 1500 g/l | pH = 9,7 | CF = 12 s | Pas de sédimentation |
| 3 | Sel de potassium copolymère anhydride maléique-diisobutylène (GEROPON TAK) | 1000 g/l | pH = 10,4 | CF = 12 s | Pas de sédimentation |
| 4 | Sel de potassium copolymère anhydride maléique-diisobutylène (GEROPON TAK) | 1500 g/l | pH = 10,4 | CF = 15 s | Pas de sédimentation |

Exemples 5 à 8

Dispersions de trifluorure de cérium comprenant un homopolymère du type (b)

On met en oeuvre à titre d'agents dispersants :

– dans les exemples 5 et 6 : un polyacrylate neutralisé à la triéthanolamine de masse moléculaire en poids égal à 5000 (GEROPON HB).

– dans les exemples 7 et 8 : un polyméthacrylate neutralisé à l'aide d'hydroxyde de potassium de masse moléculaire en poids égal à 2500 (GEROPON DG).

On prépare selon le mode opératoire décrit ci-dessus une dispersion aqueuse de trifluorure de cérium à différentes concentrations 1000 g/l et 1500 g/l, en mettant en oeuvre les homopolymères précités du type (b).

Les résultats obtenus sont consignés dans le Tableau II.

Tableau II

| Exemple | Agent dispersant | Dispersion | | Après stockage 20 jours à 50°C | |
|---|---|---|---|---|---|
| | | Concentration en $CeF_3$ | pH initial | Viscosité coupe FORD n° 4 | Observations |
| 5 | Polyacrylate de triéthanolamine (GEROPON HB) | 1000 g/l | pH = 8.5 | CF = 13 s | Pas de sédimentation |
| 6 | Polyacrylate de triéthanolamine (GEROPON HB) | 1500 g/l | pH = 8,5 | CF = 14 s | Pas de sédimentation |
| 7 | Polyméthacrylate de potassium (GEROPON DG) | 1000 g/l | pH = 5,6 | CF = 14 s | Pas de sédimentation |
| 8 | Polyméthacrylate de potassium (GEROPON DG) | 1500 g/l | pH = 6,6 | CF = 15 s | Pas de sédimentation |

Exemple 9

Dispersion de trifluorure de cérium comprenant un terpolymère du type (c)

Dans cet exemple, on prépare une dispersion aqueuse de trifluorure de cérium à 1000 g/l en faisant appel, à titre d'agent dispersant, à un terpolymère acide acrylique - acide méthacrylique - méthallylsulfonate de sodium avec un rapport molaire acide acrylique/acide méthacrylique égal à 1,19 et un pourcentage molaire en méthallylsulfonate de sodium égal à 5,6 % (PETROGIL D 161) : ledit terpolymère étant préparé conformément à FR-A 2 483 932.

La dispersion aqueuse de trifluorure de cérium présente un pH initial de 3,00. Soumise au teste de stabilité, elle ne sédimente pas au cours du stockage et sa viscosité mesurée après stockage (cF4) est de 13 secondes.

Exemples 10 et 11

Dispersions de trifluorure de cérium comprenant un polymère du type (d)

Dans les exemples 10 et 11, on prépare une dispersion aqueuse de trifluorure de cérium respectivement à 1000 g/l et à 1500 g/l en faisant appel, à titre d'agent dispersant, à un mélange de mono-et de diester phosphorique de tri-(phényl-1 éthyl)phénol polyéthyléné ayant 16 moles d'oxyde d'éthylène par mole de phénol, forme neutralisée à la triéthanolamine (SOPROPHOR FL).

Les résultats obtenus sont consignés dans le Tableau III.

Tableau III

| Exemple | Agent dispersant | Dispersion | | Après stockage 20 jours à 50°C | |
|---|---|---|---|---|---|
| | | Concentration en $CeF_3$ | pH initial | Viscosité coupe FORD n° 4 | Observations |
| 10 | Ester phosphorique de tri-(phényl-1 éthyl) phénol polyoxyéthyléné neutralisé TEA (SOPROPHOR FL) | 1000 g/l | pH = 7,1 | CF = 12 s | Pas de sédimentation |
| 11 | Ester phosphorique de tri-(phényl-1 éthyl) phénol polyoxyéthyléné neutralisé TEA (SOPROPHOR FL) | 1500 g/l | pH = 7,1 | CF = 20 s | Pas de sédimentation |

Essai A comparatif

Dans cet essai, on prépare une dispersion aqueuse de trifluorure de cérium à 1000 g/l, en faisant appel, à titre d'agent dispersant, à un condensat de dihydroxy-4,4 diphénylsulfone (GEROPON GN).

La dispersion aqueuse de trifluorure de cérium présente un pH initial de 6,4. Suite au test de stabilité, on note une floculation de la dispersion et sa viscosité mesurée après stockage (cF4) est de 48 secondes.

Essai B comparatif

Dans l'essai qui suit, on prépare une dispersion aqueuse de trifluorure de cérium à 1000 g/l en utilisant, à titre d'agent dispersant, un nonylphénol polyoxyéthyléné ayant 17 moles d'oxyde d'éthylène par mole de phénol (SOPROPHOR BC 17).

On suit le protocole opératoire défini ci-dessus, mais il n'est pas possible de conduire l'opération de broyage, car il y a une prise en masse qui bloque le broyeur.

**Revendications**

1. Dispersions d'halogénures de terres rares en milieu aqueux, caractérisées par le fait qu'elles comprennent au moins un halogénure de terre rare et au moins un agent dispersant choisi dans le groupe formé par :

(a) un copolymère d'un acide carboxylique éthyléniquement insaturé ou l'un de ses dérivés et d'un composé α-oléfinique et/ou d'un composé vinylique,

(b) un homopolymère ou copolymère d'un acide carboxylique éthyléniquement insaturé ou l'un de ses dérivés,

(c) un copolymère d'au moins un acide carboxylique éthyléniquement insaturé et d'au moins un sel d'un acide sulfonique éthyléniquement insaturé.

(d) un polymère d'oxyde d'alcoylène d'un (arylalkyl)phénol, éventuellement phosphaté ou sulfaté.

2. Dispersions d'halogénures de terres rares selon la revendication 1 caractérisées par le fait que l'halogénure de terre rare est un trifluorure de terre rare.

3. Dispersions d'halogénures de terres rares selon l'une des revendications 1 et 2 caractérisées par le fait que l'halogénure de terre rare est un trifluorure de cérium, de lanthane, praséodyme, néodyme et/ou samarium.

4. Dispersions d'halogénures de terres rares selon l'une des revendications 1 à 3 caractérisées par le fait que l'halogénure de terre rare est un trifluorure de cérium présentant un diamètre moyen d'agrégats variant entre 0,1 et 0,5 µm.

5. Dispersions d'halogénures de terres rares selon l'une des revendications 1 à 4 caractérisées par le fait que l'agent dispersant est un copolymère (a) obtenu à partir :

. d'un acide carboxylique insaturé ou l'un de ses dérivés de formule (I) :

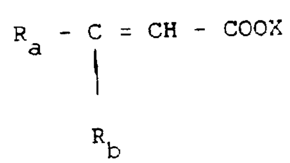

(I)

dans la formule (I) :

– $R_a$ est un atome d'hydrogène ou un radical alcoyle ayant de 1 à 10 atomes de carbone et éventuellement porteur d'un groupement -COOX

– $R_b$ est un atome d'hydrogène ou un groupement -COOX

. et d'un composé α-oléfinique répondant à la formule (II) et/ou un composé vinylique de formule (III) :

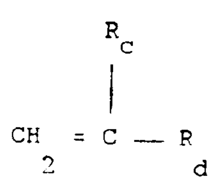

(II)

$$CH_2 = \overset{R_e}{\overset{|}{C}} - R_f \qquad (III)$$

dans les formules (II) et (III) :

– X représente un atome d'hydrogène, ou un reste d'une base minérale ou organique

– $R_c$ représente un atome d'hydrogène ou un radical alcoyle linéaire ou ramifié ayant de 1 à 4 atomes de carbone

– $R_d$ représente un radical alcoyle linéaire ou ramifié ayant de 1 à 12 atomes de carbone

– $R_e$ représente un atome d'hydrogène ou un radical alcoyle linéaire ou ramifié ayant de 1 à 4 atomes de carbone

– $R_f$ représente l'un des groupements suivants :

.
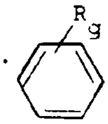

$R_g$ représentant un atome d'hydrogène ou un ou plusieurs radicaux alcoyle ayant de 1 à 4 atomes de carbone

. Cl

. 00C-$R_h$ — $R_h$ étant un radical alcoyle ayant de 1 à 8 atomes de carbone

. O - $R_i$ — $R_i$ ayant la même signification que $R_h$

. COOX

. COO-$R_j$ — $R_j$ ayant la même signification que $R_h$

. CO - $NH_2$

. C ≡ N

6. Dispersions d'halogénures de terres rares selon la revendication 5 caractérisés par le fait que l'acide carboxylique éthyléniquement insaturé ou dérivé entrant dans la composition du copolymère (a) est l'acide maléique ou l'acide fumarique ou leurs dérivés tels qu'esters, hémiesters ; l'acide itaconique, l'acide citraconique ; l'anhydride maléique ; les acides mono- et dialcoylmaléiques et les acides mono-et dialcoylfumariques : le radical alcoyle ayant de 1 à 4 atomes de carbone,

7. Dispersions d'halogénures de terres rares selon l'une des revendications 5 et 6 caractérisées par le fait que le composé α-oléfinique entrant dans la composition du copolymère (a) est l'éthylène, le propylène, le butène-1, l'isobutylène, le n-pentène-1, l'isoprène, le méthyl-2 butène-1, le n-hexène-1, le méthyl-2 pentène-1, le méthyl-4 pentène-1, l'éthyl-2 butène-1, le triméthyl-2,4,4 pentène-1 appelé diisobutylène, le butadiène-1,3, le pentadiène-1,3, l'hexadiène-1,3, l'octadiène-1,3, le méthyl-2 diméthyl-3,3 pentène-1, le méthyl-2 diméthyl-4,4 pentène-1,

8. Dispersions d'halogénures de terres rares selon l'une des revendications 5 à 7 caractérisées par le fait que le composé vinylique entrant dans la composition du copolymère (a) est le styrène, le chlorure de vinyle, les esters vinyliques d'acides aliphatiques ayant de 1 à 8 atomes de carbone tels que l'acétate de vinyle, le propionate de vinyle, le butyrate de vinyle, les éthers vinyliques tels que l'oxyde de méthyle et de vinyle, l'acide acrylique ou méthacrylique, et leurs esters d'alcoyle contenant de 1 à 8 atomes de carbone, tels que l'acrylate de méthyle, d'éthyle ou de butyle, le méthacrylate de méthyle, d'éthyle et de butyle, l'acrylamide, le méthacrylamide, l'acrylonitrile, le méthacrylonitrile.

9. Dispersions d'halogénures de terres rares selon la revendication 5 caractérisées par le fait que le copolymère (a) est un copolymère anhydride maléique-diisobutylène.

10. Dispersions d'halogénures de terres rares selon l'une des revendications 5 à 9 caractérisées par le fait que le copolymère (a) a une masse moléculaire moyenne en poids comprise entre 500 et 50 000.

11. Dispersions d'halogénures de terres rares selon la revendication 10 caractérisées par le fait que le copolymère (a) a une masse moléculaire moyenne en poids comprise entre 500 et 15 000.

12. Dispersions d'halogénures de terres rares selon l'une des revendications 5 à 11 caractérisées par le

fait que le rapport molaire acide carboxylique de formule (I)/composés insaturés de formule (II) et/ou (III) est égal à 1.

13. Dispersions d'halogénures de terres rares selon l'une des revendications 5 à 12 caractérisées par le fait que le copolymère (a) est obtenu par polymérisation radicalaire dans un solvant organique.

14. Dispersions d'halogénures de terres rares selon la revendication 13 caractérisées par le fait que le copolymère (a) est neutralisé par addition d'une base jusqu'à obtention d'un pH compris entre 8 et 12.

15. Dispersions d'halogénures de terres rares selon l'une des revendications 1 à 4 caractérisées par le fait que l'agent dispersant est un polymère (b) résultant de la polymérisation d'au moins un acide carboxylique éthyléniquement insaturé ou l'un de ses dérivés répondant à la formule (IV) :

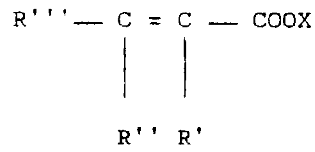

(IV)

dans ladite formule (IV) :

– R′ représente un atome d'hydrogène, un atome chlore ou un radical alcoyle linéaire ou ramifié ayant de 1 à 4 atomes de carbone éventuellement porteur d'un groupement -COOX.

– R″ représente un atome d'hydrogène ou un radical alcoyle linéaire ou ramifié ayant de 1 à 4 atomes de carbone.

– R‴ représente un atome d'hydrogène, un radical alcoyle linéaire ou ramifié ayant de 1 à 4 atomes de carbone ou un groupement -COOX.

– X est un atome d'hydrogène ou un reste d'une base minérale ou organique.

16. Dispersions d'halogénures de terres rares selon la revendication 15 caractérisées par le fait que le polymère (b) résulte de la polymérisation de l'acide acrylique ou méthacrylique, et leurs esters d'alcoyle contenant de 1 à 4 atomes de carbone, tels que l'acrylate ou le méthacrylate de méthyle, d'éthyle ou de butyle, l'acide éthacrylique, α-chloroacrylique, crotonique, itaconique, maléïque, fumarique, citraconique, mésaconique.

17. Dispersions d'halogénures de terres rares selon la revendication 16 caractérisées par le fait que le polymère (b) résulte de la polymérisation de l'acide acrylique et/ou méthacrylique.

18. Dispersions d'halogénures de terres rares selon l'une des revendications 16 et 17 caractérisées par le fait que le polymère (b) est traité par une base telle que l'hydroxyde de sodium, de potassium, d'ammonium ou une alcanolamine.

19. Dispersions d'halogénures de terres rares selon l'une des revendications 1 à 4 caractérisées par le fait que l'acide carboxylique éthyléniquement insaturé entrant dans la composition du copolymère (c) est de l'acide acrylique, méthacrylique, éthacrylique, α-chloroacrylique, crotonique, itaconique, maléique, fumarique, citraconique, mésaconique.

20. Dispersions d'halogénures de terres rares selon la revendication 19 caractérisées par le fait que l'acide carboxylique éthyléniquement insaturé est de l'acide acrylique ou méthacrylique.

21. Dispersions d'halogénures de terres rares selon l'une des revendications 19 et 20 caractérisées par le fait que l'acide carboxylique éthyléniquement insaturé est un mélange d'acide acrylique et d'acide méthacrylique selon un rapport molaire compris entre 0,05/1 et 10/1.

22. Dispersions d'halogénures de terres rares selon la revendication 21 caractérisées par le fait que l'acide carboxylique éthyléniquement insaturé est un mélange d'acide acrylique et d'acide méthacrylique selon un rapport molaire compris entre 0,10/1 et 6/1.

23. Dispersions d'halogénures de terres rares selon l'une des revendications 19 à 22 caractérisées par le fait que le sel d'acide sulfonique éthyléniquement insaturé intervenant dans la composition du copolymère (c) est un alkylsulfonate, un méthallylsulfonate, un vinylsulfonate ou un styrènesulfonate de métaux alcalins ou d'ammonium.

24. Dispersions d'halogénures de terres rares selon la revendication 23 caractérisées par le fait que le sel d'acide sulfonique éthyléniquement insaturé est un méthallylsulfonate de sodium ou de potassium.

25. Dispersions d'halogénures de terres rares selon l'une des revendications 19 à 24 caractérisées par le fait que le pourcentage molaire du sel d'acide sulfonique éthyléniquement insaturé représente de 1 à 60 % en mole du mélange total de monomères.

26. Dispersions d'halogénures de terres rares selon la revendication 25 caractérisées par le fait que ledit pourcentage molaire représente de 3 à 8 % en mole du mélange total de monomères.

27. Dispersions d'halogénures de terres rares selon l'une des revendications 19 à 26 caractérisées par le

fait que copolymère (c) a une masse moléculaire moyenne en poids comprise entre 500 et 8000.

28. Dispersions d'halogénures de terres rares selon la revendication 27 caractérisées par le fait que le copolymère (c) a une masse moléculaire moyenne en poids comprise entre 1500 et 4000.

29. Dispersions d'halogénures de terres rares selon l'une des revendications 1 à 4 caractérisées par le fait que l'agent dispersant est un polymère (d) répondant à l'une des formules (V) à (VII) suivantes :

$$R_1 ( O - R )_n \; OH \qquad (V)$$

$$R_1 ( O - R )_n \; O\,SO_3\,X \qquad (VI)$$

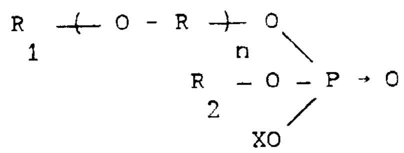 (VII)

dans les formules (V) à (VII) :

– n est compris entre 1 et environ 40

– X représente un atome d'hydrogène ou un reste d'une base minérale ou organique

– R est un radical alcoylène ayant de 2 à 4 atomes de carbone

– $R_2$ est :

. soit un reste X : les deux restes X (quand $R_2$ = X) pouvant être identiques ou différents

. soit l'un des radicaux $R_1 ( O - R )_n$ : les radicaux $R_2$ et $R_1 ( O - R )_n$ pouvant être identiques ou différents

. $R_1$ représente l'un des radicaux symbolisés par la formule (VIII) :

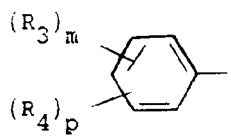

(VIII)

dans la formule (VIII), m est un nombre entier égal à 1, 2, 3 ; p est un nombre entier égal à 1 ou 2 ; $R_4$ représente un atome d'hydrogène ou un radical alcoyle ayant de 1 à 4 atomes de carbone et le radical $R_3$ symbolise un radical de formule (IX) :

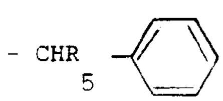

(IX)

$R_5$ représente un atome d'hydrogène, un radical alcoyle ayant de 1 à 4 atomes de carbone ou un radical phényle.

30. Dispersions d'halogénures de terres rares selon la revendication 29 caractérisées par le fait que l'agent dispersant est un polymère (d) répondant à l'une des formules (V) à (VII) dans lesquelles :

– R représente un radical éthylène

– $R_1$ représente un radical de formule (VIII) dans laquelle m est un nombre égal à 2 ou 3 ; $R_4$ est un atome d'hydrogène ; le radical $R_3$ un radical de formule (IX)

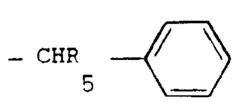

(IX)

dans laquelle $R_5$ symbolise un atome d'hydrogène, un radical méthyle ou phényle

– $R_2$ est :

. soit un reste X : les deux restes X étant identiques quand $R_2$ = X

. soit un radical $R_1 ( O - CH_2 - CH_2 )_n$ : les radicaux $R_2$ et $R_1 ( O - CH_2 - CH_2 )_n$ étant identiques.

31. Dispersions d'halogénures de terres rares selon l'une des revendications 29 et 30 caractérisées par le fait que l'agent dispersant est un polymère (d) répondant à l'une des formules (V) à (VII) dans lesquelles :

– n est compris entre 3 et 40

– X est un atome d'hydrogène, un atome de sodium, de potassium, un radical ammonium, une monoéthanolamine, une diéthanolamine, une triéthanolamine

– R est un radical éthylène

– $R_1$ représente un radical de formule (VIII) dans laquelle m est un nombre égal à 2 ou 3 ; $R_4$ est un atome d'hydrogène ; le radical $R_3$ est un radical de formule (IX) :

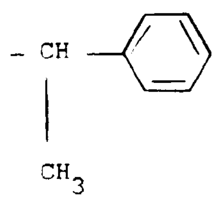

(IX)

– $R_2$ est :

. soit un reste X : les deux restes X étant identiques quand $R_2$ = X

. soit un radical $R_1 \left( O - CH_2 - CH_2 \right)_n$ : les radicaux $R_2$ et $R_1 \left( O - CH_2 - CH_2 \right)_n$ étant identiques.

32. Dispersions d'halogénures de terres rares selon l'une des revendications 29 à 31 caractérisées par le fait que l'agent dispersant est un polymère (d) choisi parmi :

– les tri-(phényl-1 éthyl)phénols polyoxyéthylénés ayant de 10 à 40 moles d'oxyde d'éthylène (O.E.) par mole de phénol.

– les di(phényl-1 éthyl)phénols polyoxyéthylénés ayant de 3 à 20 moles d'oxyde d'éthylène par mole de phénol.

– les sulfates de tri-(phényl-1 éthyl)phénols polyoxyéthylénés ayant de 10 à 40 moles d'oxyde d'éthylène par mole de phénol, sous forme acide ou neutralisée.

– les sulfates de di-(phényl-1 éthyl)phénols polyoxyéthylénés ayant de 3 à 20 moles d'oxyde d'éthylène par mole de phénol, sous forme acide ou neutralisée.

– les mono- et diesters phosphoriques de tri-(phényl-1 éthyl)phénols polyoxyéthylénés ayant de 10 à 40 moles d'oxyde d'éthylène par mole de phénol, sous forme acide ou neutralisée.

– les mono- et diesters phosphoriques de di-(phényl-1 éthyl)phénols polyoxyéthylénés ayant de 3 à 20 moles d'oxyde d'éthylène par mole de phénol, sous forme acide ou neutralisée.

33. Dispersions d'halogénures de terres rares selon l'une des revendications 1 à 32 caractérisées par le fait qu'elles comprennent en outre un agent anti-gel et/ou un agent anti-moussant.

34. Dispersions d'halogénures de terres rares selon l'une des revendications 1 à 33 caractérisées par le fait qu'elles comprennent :

– de 5 à 80 % d'un ou des halogénure(s) de terre(s) rare(s)

– de 0,1 à 12 % d'un agent dispersant (a), (b), (c) et/ou (d)

– de 0 à 5 % d'un agent anti-moussant

– de 0 à 20 % d'un agent anti-gel,

– de l'eau en quantité suffisante pour obtenir 100 %

35. Dispersions d'halogénures de terres rares selon la revendication 34 caractérisées par le fait qu'elles comprennent :

– de 20 à 60 % d'un ou des halogénure(s) de terre(s) rare(s)

– de 0,3 à 8 % d'un agent dispersant (a), (b), (c) et/ou (d)

– de 0 à 3 % d'un agent anti-moussant

– de 0 à 15 % d'un agent anti-gel

– de l'eau en quantité suffisante pour obtenir 100 %

36. Procédé d'obtention des dispersions d'halogénures de terres rares en milieu aqueux décrites dans l'une des revendications 1 à 35 caractérisé par le fait qu'il consiste à préparer une solution contenant un agent dispersant (a), (b), (c) et/ou (d), éventuellement un agent anti-gel, de l'eau qui constitue le milieu de dispersion, à mettre en dispersion sous agitation au moins un halogénure de terre rare, puis à effectuer le broyage de la dispersion et éventuellement à dégazer la dispersion obtenue.

37. Procédé selon la revendication 36 caractérisé par le fait que l'agent anti-moussant est ajouté au cours du broyage ou lors du dégazage.

38. Application des dispersions d'halogénures de terres rares décrites dans l'une des revendications 1 à

35, dans le domaine de la lubrification.

**Patentansprüche**

1. Dispersionen von Halogeniden der Seltenen Erden in einem wäßrigen Medium, dadurch gekennzeichnet, daß sie wenigstens ein Halogenid eines Seltenerdmetalls und wenigstens ein Dispergierungsmittel enthalten, ausgewählt aus der Gruppe von:

a) einem Copolymeren einer ethylenisch ungesättigten Carbonsäure oder eines ihrer Derivate und einer α-Olefin- und/oder Vinylverbindung,

b) einem Homopolymeren oder Copolymeren einer ethylenisch ungesättigten Carbonsäure oder eines ihrer Derivate,

c) einem Copolymeren wenigstens einer ethylenisch ungesättigten Carbonsäure und wenigstens eines Salzes einer ehtylenisch ungesättigten Sulfonsäure,

d) einem Polymeren eines Alkylenoxids eines (Arylalkyl)Phenols, gegebenenfalls phosphatiert oder sulfatiert.

2. Dispersionen von Halogeniden der Seltenen Erden nach Anspruch 1, dadurch gekennzeichnet, daß das Halogenid eines Seltenerdmetalls ein Trifluorid eines Seltenerdmetalls ist.

3. Dispersionen von Halogeniden der Seltenen Erden nach Anspruch 1 oder 2, dadurch gekennzeichnet, daß das Halogenid eines Seltenerdmetalls ein Trifluorid von Cer, Lanthan, Praseodym, Neodym und/oder Samarium ist.

4. Dispersionen von Halogeniden der Seltenen Erden nach einem der Ansprüche 1 bis 3, dadurch gekennzeichnet, daß das Halogenid eines Seltenerdmetalls ein Certrifluorid mit einem mittleren Aggregatdurchmesser zwischen 0,1 und 0,5 µm ist.

5. Dispersionen von Halogeniden der Seltenen Erden nach einem der Ansprüche 1 bis 4, dadurch gekennzeichnet, daß das Dispergierungsmittel ein Copolymeres (a) ist, erhalten aus:

. einer ungesättigten Carbonsäure oder eines ihrer Derivate der Formel (I):

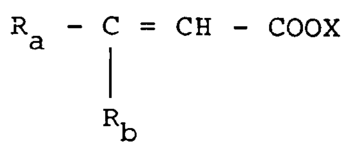

(I)

in der Formel (I):

– ist $R_a$ ein Wasserstoffatom oder ein Alkylrest mit 1 bis 10 Kohlenstoffatomen und gegebenenfalls Träger einer -COOX Gruppe

– ist $R_b$ ein Wasserstoffatom oder eine -COOX Gruppe

. und einer α-olefinischen Verbindung der Formel (II) und/oder einer Vinylverbindung der Formel (III):

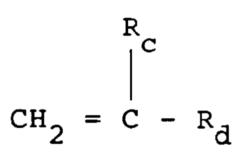

(II)

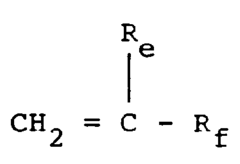

(III)

in den Formeln (II) und (III):

– bedeutet X ein Wasserstoffatom oder einen Rest einer mineralischen oder organischen Base

– bedeutet $R_c$ ein Wasserstoffatom oder einen gradkettigen oder verzweigten Alkylrest mit 1 bis 4 Kohlenstoffatomen

– bedeutet $R_d$ einen gradkettigen oder verzweigten Alkylrest mit 1 bis 12 Kohlenstoffatomen

– bedeutet $R_e$ ein Wasserstoffatom oder einen gradkettigen oder verzweigten Alkylrest mit 1 bis 4 Kohlenstoffatomen

– bedeutet $R_f$ eine der folgenden Gruppen:

. 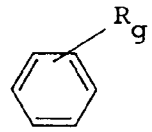

$R_g$ bedeutet ein Wasserstoffatom oder einen oder mehrere Alkylreste mit 1 bis 4 Kohlenstoffatomen

. Cl

. OOC-$R_h$ $R_h$ ist ein Alkylrest mit 1 bis 8 Kohlenstoffatomen

. O - $R_i$ $R_i$ hat dieselbe Bedeutung wie $R_h$

. COOX

. COO - $R_j$ $R_j$ hat dieselbe Bedeutung wie $R_h$

. CO - $NH_2$

. C ≡ N

6. Dispersionen von Halogeniden der Seltenen Erden nach Anspruch 5, dadurch gekennzeichnet, daß die ehtylenisch ungesättigte Carbonsäure oder das Derivat, das in die Zusammensetzung des Copolymeren (a) eingeht, Malein- oder Fumarsäure oder ihre Derivate, wie Ester oder Halbester, Itaconsäure, Citraconsäure, Maleinsäureanhydrid, Mono- und Dialkylmaleinsäuren ist, wobei der Alkylrest 1 bis 4 Kohlenstoffatome hat.

7. Dispersionen von Halogeniden der Seltenen Erden nach einem der Ansprüche 5 bis 6, dadurch gekennzeichnet, daß die α-Olefinverbindung, die in die Zusammensetzung des Copolymeren (a) eingeht, Ethylen, Propylen, 1-Buten, Isobutylen, n-Penten-1, Isopren, 2-Methyl-1-buten, n-Hexen-1, 2-Methyl-1-penten, 4-Methyl-1-penten, 2-Ethyl-1-buten, 2,4,4-Trimethyl-1-penten, Diisobutylen genannt, 1,3-Butadien, 1,3-Pentadien, 1,3-Hexadien, 1,3-Octadien, 2-Methyl-3,3-dimethyl-1-penten, 2-Methyl-4,4-dimethyl-1-penten ist.

8. Dispersionen von Halogeniden der Seltenen Erden nach einem der Ansprüche 5 bis 7, dadurch gekennzeichnet, daß die Vinylverbindung, die in die Zusammensetzung des Copolymeren (a) eingeht, Styrol, Vinylchlorid, aliphatische Vinylsäureester mit 1 bis 8 Kohlenstoffatomen wie Vinylacetat, Vinylpropionat, Vinylbutyrat, Vinylether wie Methyl- und Vinyloxid, Acryl- oder Methacrylsäure und ihre Alkylester mit 1 bis 8 Kohlenstoffatomen wie Methyl-, Ethyl- oder Butylacrylat, Methyl-, Ethyl- und Butylmethacrylat, Acrylamid, Methacrylamid, Acrylnitril und Methacrylnitril ist.

9. Dispersionen von Halogeniden der Seltenen Erden nach Anspruch 5, dadurch gekennzeichnet, daß das Copolymere (a) ein Copolymeres von Diisobutylenmaleinsäureanhydrid ist.

10. Dispersionen von Halogeniden der Seltenen Erden nach einem der Ansprüche 5 bis 9, dadurch gekennzeichnet, daß das Copolymere (a) ein mittleres Molekulargewicht zwischen 500 und 50.000 hat.

11. Dispersionen von Halogeniden der Seltenen Erden nach Anspruch 10, dadurch gekennzeichnet, daß das Copolymere (a) ein mittleres Molekulargewicht zwischen 500 und 15.000 hat.

12. Dispersionen von Halogeniden der Seltenen Erden nach einem der Ansprüche 5 bis 11, dadurch gekennzeichnet, daß das Molverhältnis Carbonsäure der Formel (I)/ungesättigte Verbindungen der Formel (II) und/oder (III) gleich 1 ist.

13. Dispersionen von Halogeniden der Seltenen Erden nach einem der Ansprüche 5 bis 12, dadurch gekennzeichnet, daß das Copolymere (a) durch Radikalpolymerisation in einem organischen Lösungsmittel erhalten wird.

14. Dispersionen von Halogeniden der Seltenen Erden nach Anspruch 13, dadurch gekennzeichnet, daß das Copolymere (a) durch das Hinzufügen einer Base bis zu einem pH-Wert zwischen 8 und 12 neutralisiert ist.

15. Dispersionen von Halogeniden der Seltenen Erden nach einem der Ansprüche 1 bis 4, dadurch gekennzeichnet, daß das Dispergierungsmittel ein Polymeres (b) ist, das aus der Polymerisation wenigstens einer ethylenisch ungesättigten Carbonsäure oder eines ihrer Derivate erhalten wird, die der Formel (IV):

$$R''' - \underset{R''}{\underset{|}{C}} = \underset{R'}{\underset{|}{C}} - COOX \qquad (IV)$$

entsprechen, in der Formel (IV):

– bedeutet R′ ein Wasserstoffatom, ein Chloratom oder einen gradkettigen oder verzweigten Alkylrest mit 1 bis 4 Kohlenstoffatomen, gegebenenfalls Träger einer -COOX Gruppe;

– bedeutet R″ ein Wasserstoffatom oder einen gradkettigen oder verzweigten Alkylrest mit 1 bis 4 Kohlenstoffatomen;

– bedeutet R‴ ein Wasserstoffatom, einen gradkettigen oder verzweigten Alkylrest mit 1 bis 4 Kohlenstoffatomen oder eine -COOX Gruppe;

– ist X ein Wasserstoffatom oder ein Rest einer mineralischen oder organischen Base.

16. Dispersionen von Halogeniden der Seltenen Erden nach Anspruch 15, dadurch gekennzeichnet, daß das Polymere (b) aus der Polymerisation von Acryl- oder Methacrylsäuren und ihren Alkylestern mit 1 bis 4 Kohlenstoffatomen, wie Methyl-, Ethyl- oder Butylacrylat oder -methacrylat, Ethacrylsäure, α-Chloroacrylsäure, Crotonsäure, Itaconsäure, Maleinsäure, Fumarsäure, Citraconsäure und Mesaconsäure erhalten wird.

17. Dispersionen von Halogeniden der Seltenen Erden nach Anspruch 16, dadurch gekennzeichnet, daß das Polymere (b) aus der Polymerisation von Acryl- und/oder Methacrylsäure erhalten wird.

18. Dispersionen von Halogeniden der Seltenen Erden nach einem der Ansprüche 16 und 17, dadurch gekennzeichnet, daß das Polymere (b) mit einer Base wie Natrium-, Kalium-, Ammoniumhydroxid oder einem Alkanolamin behandelt wird.

19. Dispersionen von Halogeniden der Seltenen Erden nach einem der Ansprüche 1 bis 4, dadurch gekennzeichnet, daß die ethylenisch ungesättigte Carbonsäure, die in die Zusammensetzung des Copolymeren (c) eingeht, Acrylsäure, Methacrylsäure, Ethacrylsäure, α-Chloracrylsäure, Crotonsäure, Itaconsäure, Maleinsäure, Fumarsäure, Citraconsäure und Mesaconsäure ist.

20. Dispersionen von Halogeniden der Seltenen Erden nach Anspruch 19, dadurch gekennzeichnet, daß die ethylenisch ungesättigte Carbonsäure eine Acryl- oder Methacrylsäure ist.

21. Dispersionen von Halogeniden der Seltenen Erden nach einem der Ansprüche 19 und 20, dadurch gekennzeichnet, daß die ethylenisch ungesättigte Carbonsäure ein Gemisch von Acrylsäure und Methacrylsäure mit einem Molverhältnis zwischen 0,05/1 und 10/1 ist.

22. Dispersionen von Halogeniden der Seltenen Erden nach Anspruch 21, dadurch gekennzeichnet, daß die ethylenisch ungesättigte Carbonsäure ein Gemisch von Acrylsäure und Methacrylsäure mit einem Molverhältnis zwischen 0,10/1 und 6/1 ist.

23. Dispersionen von Halogeniden der Seltenen Erden nach einem der Ansprüche 19 bis 22, dadurch gekennzeichnet, daß das Salz einer ethylenisch ungesättigten Sulfonsäure, das in die Zusammensetzung des Copolymeren (c) eingeht, Allylsulfonat, Methallylsulfonat, Vinylsulfonat oder Styrolsulfonat eines Alkalimetalls oder von Ammonium ist.

24. Dispersionen von Halogeniden der Seltenen Erden nach Anspruch 23, dadurch gekennzeichnet, daß die ethylenisch ungesättigte Sulfonsäure Natrium- oder Kaliummethallylsulfonat ist.

25. Dispersionen von Halogeniden der Seltenen Erden nach einem der Ansprüche 19 bis 24, dadurch gekennzeichnet, daß der molare Prozentsatz des Salzes der ethylenisch ungesättigten Sulfonsäure 1 bis 60 Mol-% des Gesamtgemischs der Monomeren beträgt.

26. Dispersionen von Halogeniden der Seltenen Erden nach Anspruch 25, dadurch gekennzeichnet, daß der molare Prozentsatz 3 bis 8 Mol-% des Gesamtgemischs der Monomeren beträgt.

27. Dispersionen von Halogeniden der Seltenen Erden nach einem der Ansprüche 19 bis 26, dadurch gekennzeichnet, daß das Copolymere (c) eine mittlere Molekularmasse ,in Gewicht ausgedrückt, zwischen 500 une 8.000 hat.

28. Dispersionen von Halogeniden der Seltenen Erden nach Anspruch 27, dadurch gekennzeichnet, daß das Copolymere (c) eine mittlere Molekularmasse, in Gewicht ausgedrückt, zwischen 1.500 und 4.000 hat.

29. Dispersionen von Halogeniden der Seltenen Erden nach einem der Ansprüche 1 bis 4, dadurch gekennzeichnet, daß das Dispergierungsmittel ein Polymeres (d) ist, das einer der folgenden Formeln (V) bis (VII) entspricht:

$$R_1 (O - R )_n OH \qquad (V)$$

$$R_1 (O - R )_n O\,SO_3X \qquad (VI)$$

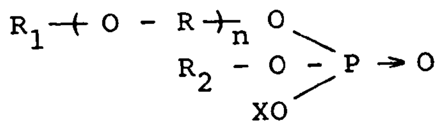 (VII)

in den Formeln (V) bis (VII):

- liegt n zwischen 1 und etwa 40
- bedeutet X ein Wasserstoffatom oder einen Rest einer mineralischen oder organischen Base
- ist R ein Alkylenrest mit 2 bis 4 Kohlenstoffatomen
- ist $R_2$
  . entweder ein Rest X : die beiden Reste X (wenn $R_2$ = X) können gleich oder verschieden sein
  . oder einer der Reste $R_1 ( O - R )_n$ : die Reste $R_2$ und $R_1 ( O - R )_n$ können gleich oder verschieden sein
  . bedeutet $R_1$ einen der Reste, dargestellt durch Formel (VIII)

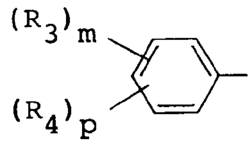 (VIII)

in der Formel (VIII) ist m eine ganze Zahl gleich 1, 2, 3; ist p eine ganze Zahl gleich 1 oder 2; bedeutet $R_4$ ein Wasserstoffatom oder einen Alkylrest mit 1 bis 4 Kohlenstoffatomen und der $R_3$-Rest stellt einen Rest der Formel (IX) dar:

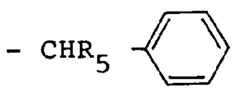 (IX)

$R_5$ bedeutet ein Wasserstoffatom, einen Alkylrest mit 1 bis 4 Kohlenstoffatomen oder einen Phenylrest.

30. Dispersionen von Halogeniden der Seltenen Erden nach Anspruch 29, dadurch gekennzeichnet, daß das Dispergierungsmittel ein Polymeres (d) ist, das einer der Formeln (V) bis (VII) entspricht, in denen

- R einen Ethylenrest bedeutet
- $R_1$ einen Rest der Formel (VIII) bedeutet, in dem m eine Zahl gleich 2 oder 3 ist; $R_4$ ein Wasserstoffatom ist; der Rest $R_3$ ein Rest der Formel (IX) ist

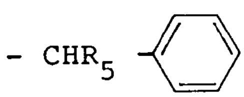 (IX)

in der $R_5$ ein Wasserstoffatom, einen Methyl- oder Phenylrest bedeutet

- $R_2$:
  . ist entweder ein Rest X : die beiden Reste X sind identisch wenn $R_2$ = X ist
  . oder ein Rest $R_1 ( O - CH_2 - CH_2 )_n$ : die Reste $R_2$ und $R_1 ( O - CH_2 - CH_2 )_n$ sind gleich.

31. Dispersionen von Halogeniden der Seltenen Erden nach einem der Ansprüche 29 und 30, dadurch gekennzeichnet, daß das Dispergierungsmittel ein Polymeres (d) ist, das den Formeln (V) bis (VII) entspricht, in denen:

- n zwischen 3 und 40 liegt
- X ein Wasserstoffatom, ein Natrium-, Kaliumatom, ein Ammoniumrest, ein Monoethanolamin, ein Diethanolamin, ein Triethanolamin ist
- R ein Ethylenrest ist
- $R_1$ einen Rest der Formel (VIII) bedeutet, in der m eine Zahl gleich 2 oder 3, $R_4$ ein Wasserstoffatom ist, der Rest $R_3$ ein Rest der Formel (IX) ist:

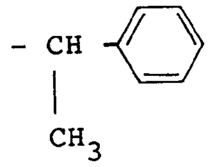

( X)

– $R_2$

. ist entweder ein Rest X : die beiden Reste X sind gleich, wenn $R_2$ = X ist

. oder ein Rest $R_1 ( O - CH_2 - CH_2 )_n$ : die Reste $R_2$ und $R_1 ( O - CH_2 - CH_2 )_n$ sind gleich.

32. Dispersionen von Halogeniden der Seltenen Erden nach einem der Ansprüche 29 bis 31, dadurch gekennzeichnet, daß das Dispergierungsmittel ein Polymeres (d) ist, ausgewählt aus:

– Polyoxyethylenischen Tri-(1-phenylethyl)phenolen mit 10 bis 40 Mol Ethylenoxid (O.E.) pro Mol Phenol.

– Polyoxyethylenischen Di-(1-phenylethyl)phenolen mit 3 bis 20 Mol Ethylenoxid pro Mol Phenol.

– Sulfaten der polyoxyethylenischen Tri-(1-phenylethyl)phenole mit 10 bis 40 Mol Ethylenoxid pro Mol Phenol, in saurer oder neutralisierter Form.

– Sulfaten der polyoxyethylenischen Di-(1-phenylethyl)phenole mit 3 bis 20 Mol Ethylenoxid pro Mol Phenol, in saurer oder neutralisierter Form.

– Phosphormono- und -diestern der polyoxyethylenischen Tri-(1-phenylethyl)phenole mit 10 bis 40 Mol Ethylenoxid pro Mol Phenol, in saurer oder neutralisierter Form.

– Phosphormono- und -diester der polyoxyethylenischen Di-(1-phenylethyl)phenole mit 3 bis 20 Mol Ethylenoxid pro Mol Phenol, in saurer oder neutralisierter Form.

33. Dispersionen von Halogeniden der Seltenen Erden nach einem der Ansprüche 1 bis 32, dadurch gekennzeichnet, daß sie außerdem ein Frostschutzmittel und/oder ein schaumhemmendes Mittel enthalten.

34. Dispersionen von Halogeniden der Seltenen Erden nach einem der Ansprüche 1 bis 33, dadurch gekennzeichnet, daß sie enthalten:

– 5 bis 80% des oder der Halogenide von Seltenen Erden

– 0,1 bis 12% eines Dispergierungsmittels (a), (b), (c) und/oder (d)

– 0 bis 5% eines schaumhemmenden Mittels

– 0 bis 20% eines Frostschutzmittels

– Wasser in ausreichender Menge, um 100% zu erreichen.

35. Dispersionen von Halogeniden der Seltenen Erden nach Anspruch 34, dadurch gekennzeichnet, daß sie enthalten:

– 20 bis 60% des oder der Halogenide von Seltenen Erden

– 0,3 bis 8% eines Dispergierungsmittels (a), (b), (c) und/oder (d)

– 0 bis 3% eines schaumhemmenden Mittels

– 0 bis 15% eines Frostschutzmittels

– Wasser in ausreichender Menge, um 100% zu erreichen.

36. Verfahren zur Herstellung von Dispersionen von Halogeniden der Seltenen Erden in wäßrigem Medium nach einem der Ansprüche 1 bis 35, bei dem eine Lösung hergestellt wird, die ein Dispergierungsmittel (a), (b), (c) und/oder (d), gegebenenfalls ein Frostschutzmittel und Wasser enthält, das das Dispersionsmittel bildet, unter Rühren wenigstens ein Halogenid eines Seltenerdmetalls dispergiert wird, anschließend die Dispersion zerkleinert wird und gegebenenfalls die erhaltene Dispersion entgast wird.

37. Verfahren nach Anspruch 36, dadurch kennzeichnet, daß das schaumhemmende Mittel im Laufe der Zerkleinerung oder während der Entgasung zugefügt wird.

38. Anwendung der Dispersionen von Halogeniden der Seltenen Erden nach einem der Ansprüche 1 bis 35 im Bereich der Schmierung.

## Claims

1. Dispersions of rare earth halides in an aqueous medium, characterized in that they contain at least one rare earth halide and at least one dispersing agent chosen from the group formed by:

(a) a copolymer of an ethylenically unsaturated carboxylic acid, or one of its derivatives, and of an $\alpha$-olefin compound and/or of a vinyl compound,

(b) a homopolymer or copolymer of an ethylenically unsaturated carboxylic acid, or one of its derivatives,

(c) a copolymer of at least one ethylenically unsaturated carboxylic acid and of at least one salt of an ethylenically unsaturated sulphonic acid,

(d) a polymer of an alkylene oxide of an (arylalkyl)phenol, optionally phosphated or sulphated.

2. Dispersions of rare earth halides according to claim 1, characterized in that the rare earth halide is a rare earth trifluoride.

3. Dispersions of rare earth halides according to one of claims 1 and 2, characterized in that the rare earth halide is a cerium, lanthanum, praseodymium, neodymium and/or samarium trifluoride.

4. Dispersions of rare earth halides according to one of claims 1 to 3, characterized in that the rare earth halide is a cerium trifluoride having a mean aggregate diameter varying between 0.1 and 0.5 µm.

5. Dispersions of rare earth halides according to. one of claims 1 to 4, characterized in that the dispersing agent is a copolymer (a) obtained from:

. an unsaturated carboxylic acid, or one of its derivatives, of formula (I):

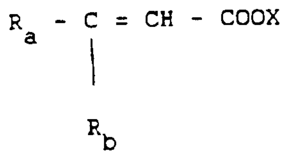

(I)

in formula (I):

- $R_a$ is a hydrogen atom or an alkyl radical having from 1 to 10 carbon atoms, and optionally carrying a -COOX group,
- $R_b$ is a hydrogen atom or a -COOX group
- and an α-olefin compound corresponding to formula (II) and/or a vinyl compound of formula (III):

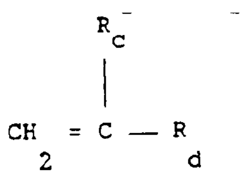

(II)

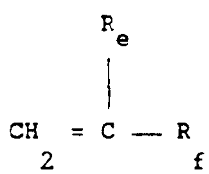

(III)

in formulae (II) and (III):

- X represents a hydrogen atom or a residue of an inorganic or organic base
- $R_c$ represents a hydrogen atom or a linear or branched alkyl radical having from 1 to 4 carbon atoms
- $R_d$ represents a linear or branched alkyl radical having from 1 to 12 carbon atoms
- $R_e$ represents a hydrogen atom or a linear or branched alkyl radical having from 1 to 4 carbon atoms
- $R_f$ represents one of the following groups:

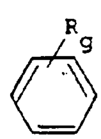

$R_g$ representing a hydrogen atom or one or more alkyl radicals having from 1 to 4 carbon atoms

. Cl
. OOC-$R_h$ being an alkyl radical having from 1 to 8 carbon atoms
. O-$R_i$ $R_i$ having the same meaning as $R_h$
. COOX
. COO-$R_j$ $R_j$ having the same meaning as $R_h$
. CO-$NH_2$
. C≡N

6. Dispersions of rare earth halides according to claim 5, characterized in that the ethylenically unsaturated carboxylic acid or derivative which enters the composition of the copolymer (a) is maleic acid or fumaric acid or their derivatives such as esters or hemiesters; itaconic acid or citraconic acid; maleic anhydride; the mono- and dialkylmaleic acids and the mono- and dialkylfumaric acids: the alkyl radical having from 1 to 4 carbon atoms.

7. Dispersions of rare earth halides according to one of claims 5 and 6, characterized in that the α-olefin compound entering the composition of the copolymer (a) is ethylene, propylene, 1-butene, isobutylene, 1-n-pentene, isoprene, 2-methyl-1-butene, 1-n-hexene, 2-methyl-1-pentene, 4-methyl-1-pentene, 2-ethyl-1-butene the 2,4,4-trimethyl-1-pentene called diisobutylene, 1,3-butadiene, 1,3-pentadiene, 1,3-hexadiene, 1,3-octadiene, 2-methyl-3,3-dimethyl-1-pentene or 2-methyl-4,4-dimethyl-1-pentene.

8. Dispersions of rare earth halides according to one of claims 5 to 7, characterized in that the vinyl compound entering the composition of the copolymer (a) is styrene, vinyl chloride, the vinyl esters of aliphatic acids having from 1 to 8 carbon atoms such as vinyl acetate, vinyl propionate or vinyl butyrate, the vinyl ethers such as methyl and vinyl oxide, acrylic or methacrylic acid, and their alkyl esters containing from 1 to 8 carbon atoms, such as methyl, ethyl or butyl acrylate, methyl, ethyl and butyl methacrylate, acrylamide, methacrylamide, acrylonitrile or methacrylonitrile.

9. Dispersions of rare earth halides according to claim 5, characterized in that the copolymer (a) is a maleic anhydride-diisobutylene copolymer.

10. Dispersions of rare earth halides according to one of claims 5 to 9, characterized in that the copolymer (a) has a mean molecular mass by weight of between 500 and 50,000.

11. Dispersions of rare earth halides according to claim 10, characterized in that the copolymer (a) has a mean molecular mass by weight of between 500 and 15,000.

12. Dispersions of rare earth halides according to one of claims 5 to 11, characterized in that the molar ratio carboxylic acid of formula (I): unsaturated compounds of formula (II) and/or (III) is equal to 1.

13. Dispersions of rare earth halides according to one of claims 5 to 12, characterized in that the copolymer (a) is obtained by radical polymerization in an organic solvent.

14. Dispersions of rare earth halides according to claim 13, characterized in that the copolymer (a) is neutralized by the addition of a base until a pH of between 8 and 12 is obtained.

15. Dispersions of rare earth halides according to one of claims 1 to 4, characterized in that the dispersing agent is a polymer (b) resulting from the polymerization of at least one carboxylic acid with ethylenic unsaturations, or one of its derivatives, corresponding to formula (IV):

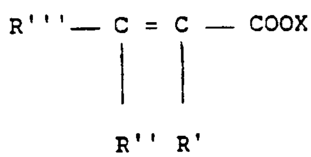

(IV)

in the said formula (IV):

- R′ represents a hydrogen atom, a chlorine atom or a linear or branched alkyl radical having from 1 to 4 carbon atoms, optionally carrying a -COOX group.
- R″ represents a hydrogen atom or a linear or branched alkyl radical having from 1 to 4 carbon atoms.
- R‴ represents a hydrogen atom, a linear or branched alkyl radical having from 1 to 4 carbon atoms or a -COOX group.
- X is a hydrogen atom or a residue of an inorganic or organic base.

16. Dispersions of rare earth halides according to claim 15, characterized in that the polymer (b) results from the polymerization of acrylic or methacrylic acid and their alkyl esters containing from 1 to 4 carbon atoms, such as methyl, ethyl or butyl acrylate or methacrylate, or ethacrylic, α-chloroacrylic, crotonic, itaconic, maleic, fumaric, citraconic or mesaconic acid.

17. Dispersions of rare earth halides according to claim 16, characterized in that the polymer (b) results from the polymerization of acrylic and/or methacrylic acid.

18. Dispersions of rare earth halides according to one of claims 16 and 17, characterized in that the polymer (b) is treated with a base such as sodium, potassium or ammonium hydroxide or an alkanolamine.

19. Dispersions of rare earth halides according to one of claims 1 to 4, characterized in that the carboxylic acid with ethylenic unsaturations entering the composition of the copolymer (c) is acrylic, methacrylic, ethacrylic, α-chloroacrylic, crotonic, itaconic, maleic, fumaric, citraconic or mesaconic acid.

20. Dispersions of rare earth halides according to claim 19, characterized in that the ethylenically unsaturated carboxylic acid is acrylic or methacrylic acid.

21. Dispersions of rare earth halides according to one of claims 19 and 20, characterized in that the ethylenically unsaturated carboxylic acid is a mixture of acrylic acid and methacrylic acid in a molar ratio of between 0.05:1 and 10:1.

22. Dispersions of rare earth halides according to claim 21, characterized in that the ethylenically unsaturated carboxylic acid is a mixture of acrylic acid and methacrylic acid in a molar ratio of between 0.10:1 and 6:1.

23. Dispersions of rare earth halides according to one of claims 19 to 22, characterized in that the salt of an ethylenically unsaturated sulphonic acid taking part in the composition of the copolymer (c) is an allylsulphonate, a methallylsulphonate, a vinylsulphonate or a styrenesulphonate of alkali metals or ammonium.

24. Dispersions of rare earth halides according to claim 23, characterized in that the salt of an ethylenically unsaturated sulphonic acid is a sodium or potassium methallylsulphonate.

25. Dispersions of rare earth halides according to one of claims 19 to 24, characterized in that the molar percentage of the salt of an ethylenically unsaturated sulphonic acid represents from 1 to 60 mol % of the total mixture of monomers.

26. Dispersions of rare earth halides according to claim 25, characterized in that the said molar percentage represents from 3 to 8 mol % of the total mixture of monomers.

27. Dispersions of rare earth halides according to one of claims 19 to 26, characterized in that copolymer (c) has a mean molecular mass by weight of between 500 and 8,000.

28. Dispersions of rare earth halides according to claim 27, characterized in that the copolymer (c) has a mean molecular mass by weight of between 1,500 and 4,000.

29. Dispersions of rare earth halides according to one of claims 1 to 4, characterized in that the dispersing agent is a polymer (d) which corresponds to one of the following formulae (V) to (VII):

$$R_1 \{O-R\}_n OH \quad (V)$$

$$R_1 \{O-R\}_n O\,SO_3X \quad (VI)$$

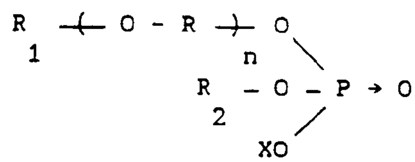

(VII)

in formulae (V) to (VII):

- n is between 1 and about 40
- X represents a hydrogen atom or a residue of an inorganic or organic base
- R is an alkylene radical having from 2 to 4 carbon atoms
- $R_2$ is:
  . either a residue X: the two residues X (when $R_2$ = X) may be identical or different.
  . or one of the radicals $R_1 \{O-R\}_n$ : the radicals $R_2$ and $R_1 \{O-R\}_n$ may be identical or different
  . $R_1$ represents one of the radicals symbolized by formula (VIII):

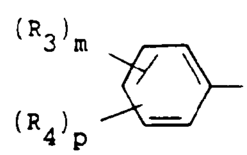

(VIII)

in formula (VIII), m is an integer equal to 1, 2 or 3; p is an integer equal to 1 or 2; $R_4$ represents a hydrogen atom or an alkyl radical having from 1 to 4 carbon atoms and the radical $R_3$ symbolizes a radical of formula (IX):

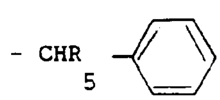

(IX)

$R_5$ represents a hydrogen atom, an alkyl radical having from 1 to 4 carbon atoms or a phenyl radical.

30. Dispersions of rare earth halides according to claim 29, characterized in that the dispersing agent is a polymer (d) corresponding to one of formulae (V) to (VII) in which:

– R represents an ethylene radical

– $R_1$ represents a radical of formula (VIII) in which m is a number equal to 2 or 3; $R_4$ is a hydrogen atom; the radical $R_3$ a radical of formula (IX)

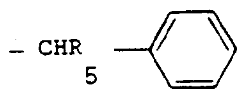 (IX)

in which $R_5$ symbolizes a hydrogen atom or a methyl or phenyl radical

– $R_2$ is:

. either a residue X: the two residues X being identical when $R_2 = X$

. or a radical $R_1 ( O - CH_2 - CH_2 )_n$ : the radicals $R_2$ and $R_1 ( O - CH_2 - CH_2 )_n$ being identical.

31. Dispersions of rare earth halides according to one of claims 29 and 30, characterized in that the dispersing agent is a polymer (d) corresponding to one of formulae (V) to (VII) in which:

– n is between 3 and 40

– X is a hydrogen atom, a sodium or potassium atom, or an ammonium radical, a monoethanolamine, diethanolamine or triethanolamine

– R is an ethylene radical

– $R_1$ represents a radical of formula (VIII) in which m is a number equal to 2 or 3; $R_4$ is a hydrogen atom; the radical $R_3$ is a radical of formula (IX):

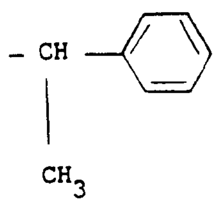 ( X)

– $R_2$ is:

. either a residue X: the two residues X being identical when $R_2 = X$

. or a radical $R_1 ( O - CH_2 - CH_2 )_n$ : the radicals $R_2$ and $R_2 (O - CH_2 - CH_2 )_n$ being identical.

32. Dispersions of rare earth halides according to one of claims 29 to 31, characterized in that the dispersing agent is a polymer (d) chosen from:

– the polyoxyethylenated tri-(1-phenylethyl)phenols having from 10 to 40 moles of ethylene oxide (E.O.) per mole of phenol,

– the polyoxyethylenated di-(1-phenylethyl)phenols having from 3 to 20 moles of ethylene oxide per mole of phenol,

– the sulphates of polyoxyethylenated tri-(1-phenylethyl)phenols having from 10 to 40 moles of ethylene oxide per mole of phenol, in the acid or neutralized form,

– the sulphates of polyoxyethylenated di-(1-phenylethyl)phenols having from 3 to 20 moles of ethylene oxide per mole of phenol, in the acid or neutralized form,

– the phosphoric mono- and diesters of polyoxyethylenated tri-(1-phenylethyl)phenols having from 10 to 40 moles of ethylene oxide per mole of phenol, in the acid or neutralized form,

– the phosphoric mono- and diesters of polyoxyethylenated di-(1-phenylethyl)phenols having from 3 to 20 moles of ethylene oxide per mole of phenol, in the acid or neutralized form.

33. Dispersions of rare earth halides according to one of claims 1 to 32, characterized in that they contain in addition an antifreeze agent and/or an antifoam agent.

34. Dispersions of rare earth halides according to one of claims 1 to 33, characterized in that they comprise:

– from 5 to 80 % of one or more rare earth halide(s)

– from 0.1 to 12 % of a dispersing agent (a), (b), (c) and/or (d)

– from 0 to 5 % of an antifoam agent

– from 0 to 20 % of an antifreeze agent,

– water in sufficient quantity to obtain 100 %

35. Dispersions of rare earth halides according to claim 34, characterized in that they comprise:

- from 20 to 60 % of one or more rare earth halide(s)
- from 0.3 to 8 % of a dispersing agent (a), (b), (c) and/or (d)
- from 0 to 3 % of an antifoam agent
- from 0 to 15 % of an antifreeze agent
- water in sufficient quantity to obtain 100 %

36. Process for obtaining dispersions of rare earth halides in an aqueous medium described in one of claims 1 to 35, characterized in that it consists in preparing a solution containing a dispersing agent (a), (b), (c) and/or (d), optionally an antifreeze agent, and water which constitutes the dispersion medium, in dispersing with stirring at least one rare earth halide, then grinding the dispersion and optionally degassing the dispersion obtained.

37. Process according to claim 36, characterized in that the antifoam agent is added in the course of grinding or during degassing.

38. Application of the dispersions of rare earth halides described in one of claims 1 to 35 in the domain of lubrication.